# EUROPEAN PATENT APPLICATION

(11) **EP 2 615 281 A1**
(43) Date of publication of application: **17.07.2013**
(21) Application number: 10857093.8
(22) Date of filing: 07.12.2010
(51) Int. Cl.: F02D 23/00, F01N 3/20, F02B 33/00, F02B 37/16, F02D 17/02, F02D 43/00

(54) **CONTROL DEVICE FOR INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: OTSUKA, Takayuki, Toyota-shi Aichi 471-8571 (JP)
(74) Representative: Kuhnen & Wacker
(86) International application number: PCT/JP2010/071911
(87) International publication number: WO 2012/077183

(57) **Abstract**

An object of the present invention is to provide a control device that is used for an internal combustion engine with a turbocharger and capable of suppressing the deterioration of a catalyst when a speed reduction fuel cut is performed in a situation where the temperature of the turbocharger is high. The control device includes a turbine for the turbocharger installed in an exhaust path of the internal combustion engine, a catalyst installed in the exhaust path and disposed downstream of the turbine, a bypass path for bypassing the turbine by connecting the exhaust path upstream of the turbine to the exhaust path between the turbine and the catalyst, and a waste gate valve capable of opening and closing the bypass path. The control device opens the waste gate valve when a speed reduction fuel cut operation is performed in a situation where the temperature of the turbocharger is higher than its setting.

## Description

### Technical Field

The present invention relates to a control device for an internal combustion engine. More specifically, the present invention relates to a control device suitable for controlling an internal combustion engine mounted on a vehicle.

### Background Art

A known control device disclosed, for instance, in Patent Document 1 (JP-A-2009-228486) is used for an internal combustion engine that includes a bypass path for establishing communication between a turbine upstream and downstream of a turbocharger installed in an exhaust path, a waste gate valve installed in the bypass path, and a catalyst installed downstream of a bypass path joint in the exhaust path. In accordance with engine operating status, this conventional control device switches between a normally closed control mode in which the waste gate valve closes in a low-revolution-speed, low-load region including an idling region and a normally open control mode in which the waste gate valve opens. When such a control scheme is used, normally open control, which provides an excellent catalyst warm-up capability, and normally closed control, which provides high acceleration response, can be selectively exercised in accordance with the engine operating status.

### Prior Art Literature

### Patent Document

Patent Document 1: JP-A-2009-228486

### Summary of the Invention

### Problem to be Solved by the Invention

An internal combustion engine with a turbocharger has a larger heat mass (heat capacity) than an internal combustion engine without a turbocharger. Further, when a speed reduction fuel cut is performed, the temperature of a gas flowing in an exhaust path varies with the heat mass and temperatures of the internal combustion engine and exhaust path although a temperature rise based on combustion energy does not occur. When the internal combustion engine has a turbocharger, the heat mass is increased accordingly. Therefore, once the temperature of the internal combustion engine becomes high, the gas passing through the turbocharger receives an increased amount of heat and raises its temperature.

Moreover, the temperature of the catalyst is high while an excess amount of oxygen exists due, for instance, to a fuel cut, sintering progresses to decrease the surface area of the catalyst. This may facilitate the deterioration of the catalyst. Therefore, when a speed reduction fuel cut is performed in a situation where the temperature of the turbocharger described above and provided for the internal combustion engine is high, it is anticipated that the deterioration of the catalyst may be facilitated.

The present invention has been made to solve the above problem. An object of the present invention is to provide a control device that is used for an internal combustion engine with a turbocharger and capable of suppressing the deterioration of a catalyst when a speed reduction fuel cut is performed in a situation where the temperature of the turbocharger is high.

### Means for Solving the Problem

A first aspect of the present invention is a control device for an internal combustion engine, the control device comprising:
a turbine for a turbocharger that is installed in an exhaust path of the internal combustion engine;
a catalyst installed in the exhaust path and disposed downstream of the turbine;
a bypass path for bypassing the turbine by connecting the exhaust path upstream of the turbine to the exhaust path between the turbine and the catalyst;
a waste gate valve capable of opening and closing the bypass path;
turbocharger temperature acquisition means for acquiring a temperature of the turbocharger;
speed reduction fuel cut operation execution means for performing a speed reduction fuel cut operation by shutting off the supply of fuel to the internal combustion engine at the time of vehicle speed reduction; and
waste gate valve opening means for opening the waste gate valve when the speed reduction fuel cut operation is performed in a situation where the temperature is higher than a temperature setting.

A second aspect of the present invention is the control device according to the first aspect, further comprising:
OT amount increase control judgment means for judging whether OT amount increase control is being exercised, the OT amount increase control being exercised to correctively increase the amount of fuel supply to the internal combustion engine for the purpose of decreasing a temperature of exhaust gas discharged from the internal combustion engine;
wherein the waste gate valve opening means opens the waste gate valve when the speed reduction fuel cut operation is performed in a situation where the temperature is higher than the temperature setting and the OT amount increase control is being exercised.

A third aspect of the present invention is the control device according to the first or the second aspect, further comprising:
forced recovery judgment means for judging whether forced recovery is to be made for a recovery upon receipt of an acceleration request to switch from the speed reduction fuel cut operation to a normal operation;
acceleration request judgment means for judging whether the acceleration request is greater than a predetermined value;
forced recovery time waste gate valve closing means for closing the waste gate valve when forced recovery is to be made for the recovery in a situation where the acceleration request is greater than the predetermined value; and
forced recovery time waste gate valve opening means for opening the waste gate valve when forced recovery is to be made for the recovery in a situation where the acceleration request is not greater than the predetermined value and the temperature is not lower than the temperature setting.

A fourth aspect of the present invention is the control device according to any one of the first to the third aspects, further comprising:
an actuator capable of locking the waste gate valve into an open position;
wherein the waste gate valve is a pressure-controlled valve that opens when a pressure of an exhaust supplied to the turbine exceeds a predetermined value and closes when the pressure of the exhaust is at a level prevailing during the speed reduction fuel cut operation; and
wherein the waste gate valve opening means opens the waste gate valve when the actuator locks the waste gate valve into the open position.

A fifth aspect of the present invention is the control device according to any one of the first to the fourth aspects, wherein the temperature is an estimated temperature of a turbine housing which is a part of the turbocharger.

### Advantages of the Invention

When a speed reduction fuel cut operation is performed in a situation where the temperature of the turbocharger is higher than its temperature setting, the first aspect of the present invention makes it possible to open the waste gate valve. Therefore, part of a gas flowing in the exhaust path can be introduced into the bypass path so as to bypass the turbocharger having a large heat mass. When part of the gas bypasses the turbocharger, the amount of heat received by the gas can be reduced to suppress a temperature rise in the catalyst. Consequently, the present invention makes it possible to suppress the deterioration of the catalyst.

When a speed reduction fuel cut operation is performed in a situation where the temperature of the turbocharger is higher than its temperature setting and OT amount increase control is being exercised, the second aspect of the present invention makes it possible to open the waste gate valve. Therefore, when a speed reduction fuel cut is performed in an OT region (high-load region) in which the temperature of the catalyst is high, the present invention makes it possible to suppress the deterioration of the catalyst in a preferable manner.

When forced recovery is made from a speed reduction fuel cut in a situation where a value designated by an acceleration request is greater than a predetermined value, the third aspect of the present invention makes it possible to close the waste gate valve. Therefore, enhanced acceleration response can be provided. Further, when forced recovery is made from the speed reduction fuel cut in a situation where a value designated by the acceleration request is not greater than the predetermined value and the temperature of the turbocharger is not lower than its temperature setting, the third aspect of the present invention makes it possible to open the waste gate valve. Therefore, a temperature rise of the catalyst can be suppressed. Consequently, the present invention makes it possible to provide enhanced acceleration response while suppressing a temperature rise of the catalyst.

Even when the employed waste gate valve is a pressure-controlled waste gate control valve that closes at an exhaust pressure exerted during a speed reduction fuel cut operation, the fourth aspect of the present invention makes it possible to lock the waste gate valve into an open position. Consequently, the present invention can suppress the deterioration of the catalyst even when the speed reduction fuel cut operation is being performed.

The fifth aspect of the present invention makes it possible to accurately judge conditions for the waste gate valve opening means in accordance with the estimated temperature of the turbine housing which is a part of the turbocharger.

### Brief Description of Drawings

[Fig. 1] Fig. 1 is a diagram illustrating the configuration of a system according to a first embodiment of the present invention.
[Fig. 2] Fig. 2 is a timing diagram illustrating the temperature behavior of the catalyst 18 that prevails when the waste gate valve 22 opens or closes during a fuel cut.
[Fig. 3] Fig. 3 is a flowchart that illustrates control routine executed by the ECU 50 according to a first embodiment of the present invention.
[Fig. 4] Fig. 4 is a flowchart that illustrates control routine executed by the ECU 50 according to a second embodiment of the present invention.

### Best Mode of Carrying Out the Invention

Embodiments of the present invention will now be described in detail with reference to the accompanying drawings. Like elements in the drawings are designated by the same reference numerals and will not be redundantly described.

### First Embodiment

### [Configuration of system according to first embodiment]

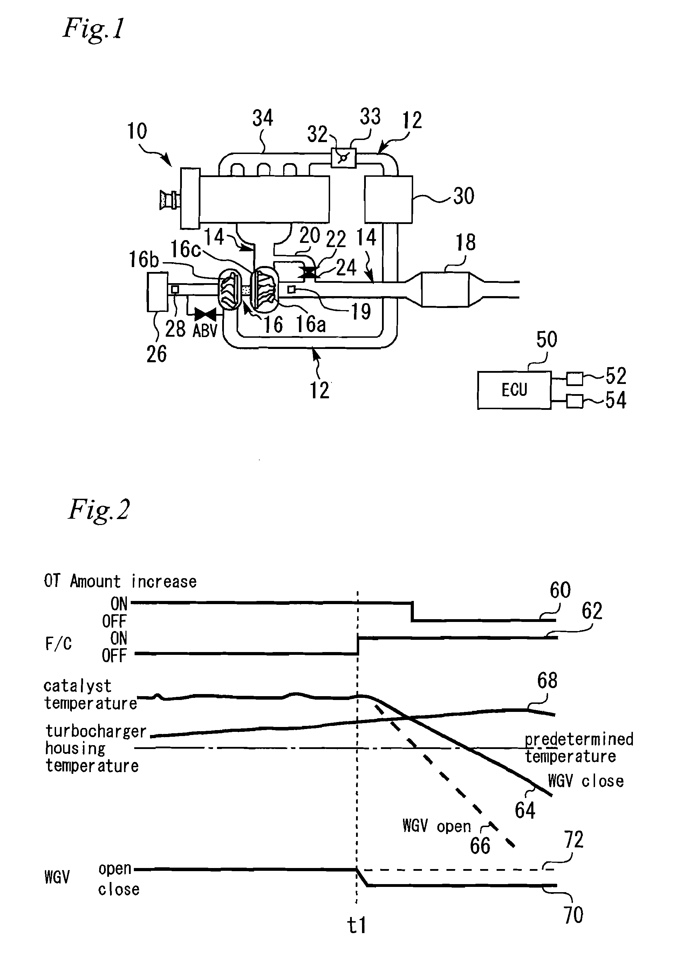

Fig. 1 is a diagram illustrating the configuration of a system according to a first embodiment of the present invention. The system shown in Fig. 1 includes an internal combustion engine 10. The internal combustion engine 10 is mounted on a vehicle and used as a motive power source therefor. The internal combustion engine 10 shown in Fig. 1 includes one or more cylinders.

An intake path 12 and an exhaust path 14 are connected to a cylinder of the internal combustion engine 10. An intake valve (not shown) is installed at a downstream end of the intake path 12 to open or close a flow path between the cylinder and the intake path 12. Similarly, an exhaust valve (not shown) is installed at an upstream end of the exhaust path 14 to open or close a flow path between the cylinder and the exhaust path 14.

An exhaust gas discharged from each cylinder of the internal combustion engine 10 flows into the exhaust path 14. The internal combustion engine 10 includes a turbocharger 16 that performs supercharging by using the energy of the exhaust gas. The turbocharger 16 includes a turbine 16a which rotates by using the energy of the exhaust gas, and a compressor 16b which is driven and rotated by the turbine 16a. The turbine 16a is disposed in the middle of the exhaust path 14. The compressor 16b is disposed in the middle of the intake path 12. Further, the turbocharger 16 includes a turbine housing 16c, which is a turbocharger's component that houses the turbine 16a and serves as a chamber into which the exhaust gas flows.

A catalyst 18 is installed in the exhaust path 14 and disposed downstream of the turbine 16a to purify hazardous components in the exhaust gas. For example, a three-way catalyst is used as the catalyst 18. An exhaust temperature sensor 19 is installed in the exhaust path 14 and disposed between the turbine 16a and the catalyst 18 to detect the temperature of the exhaust gas.

A bypass path 20 is disposed near the turbine 16a to bypass the turbine 16a by establishing a connection between the exhaust path 14 upstream of the turbine 16a and the exhaust path 14 between the turbine 16a and the catalyst 18. A waste gate valve (WGV) 22 is installed in the bypass path 20. The waste gate valve 22 is a valve that opens and closes the bypass path 20 by using, for example, a pressure-controlled actuator. The waste gate valve 22 opens when an exhaust pressure exceeds a predetermined value. The system according to the present embodiment also includes an electronically-controlled actuator 24 that is disposed near the waste gate valve 22 and capable of locking the waste gate valve 22 into an open position.

An air cleaner 26 is disposed near the inlet of the intake path 12. An air flow meter 28 is disposed near and downstream of the air cleaner 26 to detect the amount of intake air. The compressor 16b is disposed downstream of the air flow meter 28. An inter-cooler 30 is disposed downstream of the compressor 16b. Fresh air taken in through the air cleaner 26 is compressed by the compressor 16b of the turbocharger 16 and then cooled by the inter-cooler 30.

An electronically-controlled throttle valve 32 is disposed downstream of the inter-cooler 30. A throttle opening sensor 33 is disposed near the throttle valve 32 to detect the degree of opening of the throttle valve 32 (including a throttle OFF state (fully closed throttle)). The fresh air passing through the throttle valve 32 flows into an intake manifold 34 which is formed at a downstream portion of the intake path 12. The fresh air introduced into the intake manifold 34 distributively flows into each cylinder.

The system according to the present embodiment includes an ECU (electronic control unit) 50. An input section of the ECU 50 is connected not only to the above-described exhaust temperature sensor 19, air flow meter 28, and throttle opening sensor 33, but also to various other sensors for detecting the operating status of the internal combustion engine 10 such as a crank angle sensor 52 for detecting a crank angle and an accelerator opening sensor 54 for detecting a value based on the amount of depression of an accelerator operated by a driver of the vehicle and detecting the ON/OFF state of the accelerator.

An output section of the ECU 50 is connected not only to the above-described electronically-controlled actuator 24 and throttle valve 32, but also to various other actuators for controlling the operating status of the internal combustion engine 10 such as an injector (not shown) for injecting fuel into a cylinder and an ignition plug (not shown) for igniting the injected fuel. In accordance with the outputs of the aforementioned sensors and with a predetermined program, the ECU 50 operates the various actuators to control the operating status of the internal combustion engine 10.

In the system according to the present embodiment, the ECU 50 exercises OT amount increase control in accordance with the operating status. In an OT region (high-load region) in which the temperature of the catalyst 18 is high, OT amount increase control is exercised to suppress an excessive temperature rise in the catalyst 18 by correctively increasing the amount of fuel injection to lower the temperature of an exhaust discharged from the internal combustion engine 10. The amount of corrective increase is calculated in accordance with an engine speed and an intake air amount. The engine speed is calculated from a signal detected by the crank angle sensor 52.

Further, the ECU 50 performs a speed reduction fuel cut in accordance with the operating status. When the vehicle reduces its speed (the ECU 50 concludes that the throttle is OFF) and the engine speed is not lower than a predefined value, the speed reduction fuel cut is performed for control purposes to stop the injection of fuel by shutting off the supply of a drive signal to the aforementioned injector. The speed reduction fuel cut is performed in order to prevent the overheating of the catalyst 18 and provide enhanced fuel efficiency.

### [Control unique to first embodiment]

Meanwhile, the system according to the present embodiment, which includes the above-described turbocharger 16, includes the turbine housing 16c. Therefore, the system according to the present embodiment has a larger heat mass (heat capacity) than a natural intake (naturally aspirated) system without the turbocharger 16. Further, when the above-described speed reduction fuel cut is performed, since exhaust pressure is reduced, the waste gate valve 22 generally closes to let the gas pass through the turbine housing 16c. While the fuel cut is being performed, a temperature rise based on combustion energy does not occur; however, the temperature of the gas flowing in the exhaust path 14 varies with the heat mass and temperatures of the internal combustion engine 10, exhaust path 14, and turbine housing 16c. As the system according to the present embodiment includes the turbine housing 16c, the heat mass is increased accordingly. Therefore, once the temperature becomes high, the gas passing through the turbine housing 16c receives an increased amount of heat and raises its temperature.

Moreover, when the temperature of the catalyst 18 is high while an excess amount of oxygen exists due, for instance, to a fuel cut, sintering progresses to decrease the surface area of the catalyst 18. This may facilitate the deterioration of the catalyst 18. Therefore, when a speed reduction fuel cut is performed in the system according to the present embodiment in a situation where the temperature of the turbine housing 16c is high, it is anticipated that the deterioration of the catalyst 18 may be facilitated.

In the system according to the present embodiment, therefore, the waste gate valve 22 opens when the speed reduction fuel cut is performed in a situation where an estimated temperature of the turbine housing 16c is higher than a predetermined value. When the waste gate valve 22 opens, part of the gas flows in the bypass path 20 to bypass the turbine housing 16c having a high temperature and a large heat mass. This makes it possible to lower the temperature of the gas flowing into the catalyst 18.

The above control scheme will now be described in detail with reference to Fig. 2. Fig. 2 is a timing diagram illustrating the temperature behavior of the catalyst 18 that prevails when the waste gate valve 22 opens or closes during a fuel cut. A solid line 60 indicates the ON/OFF state of OT amount increase control.
A solid line 62 indicates the ON/OFF state of the fuel cut. A solid line 64 indicates temperature changes that occur in the catalyst 18 when the waste gate valve 22 closes (solid line 70). A broken line 66 indicates temperature changes that occur in the catalyst 18 when the waste gate valve 22 opens (broken line 72). A solid line 68 indicates the estimated temperature of the turbine housing 16c.

Before time t1, the internal combustion engine 10 is operated in a state where the OT amount increase control is exercised (ON) (solid line 60) and the fuel cut is not being performed (OFF) (solid line 62). In this instance, both the catalyst 18 and the turbine housing 16c are in a high-temperature state (solid lines 64, 68).

At time t1, the speed reduction fuel cut is performed while the OT amount increase control is exercised. Temperature changes that occur in the catalyst 18 when the waste gate valve 22 opens or closes during the fuel cut will be described below.

First of all, the temperature changes that occur in the catalyst 18 when the waste gate valve 22 closes during the fuel cut will be described as a comparison target of the present embodiment. When the fuel cut is performed (solid line 62) to close the waste gate valve 22 (solid line 70), the gas passes through the turbine housing 16c.

As described earlier, as the system according to the present embodiment includes the turbine housing 16c and has a large heat mass, the temperature does not readily decrease once it is increased (solid line 68). Therefore, when the waste gate valve 22 closes, the gas passing through the turbine housing 16c receives a large amount of heat. The heated gas then flows into the catalyst 18 to prevent a decrease in the temperature of the catalyst 18 after time t1 (solid line 64).

On the other hand, control unique to the present embodiment is exercised to lock the waste gate valve 22 into the open position if the estimated temperature of the turbine housing 16c is higher than a predetermined value even during the fuel cut (broken line 72). While the waste gate valve 22 remains open, part of the gas flows into the bypass path 20 to bypass the turbine housing 16c having a large heat mass. Therefore, a relatively low temperature gas flows into the catalysts 18 as compared to a case where the waste gate valve 22 closes (solid line 70). Allowing the low-temperature gas to flow into the catalyst 18 decreases the temperature of the catalyst 18 (broken line 66).

### (Control routine)

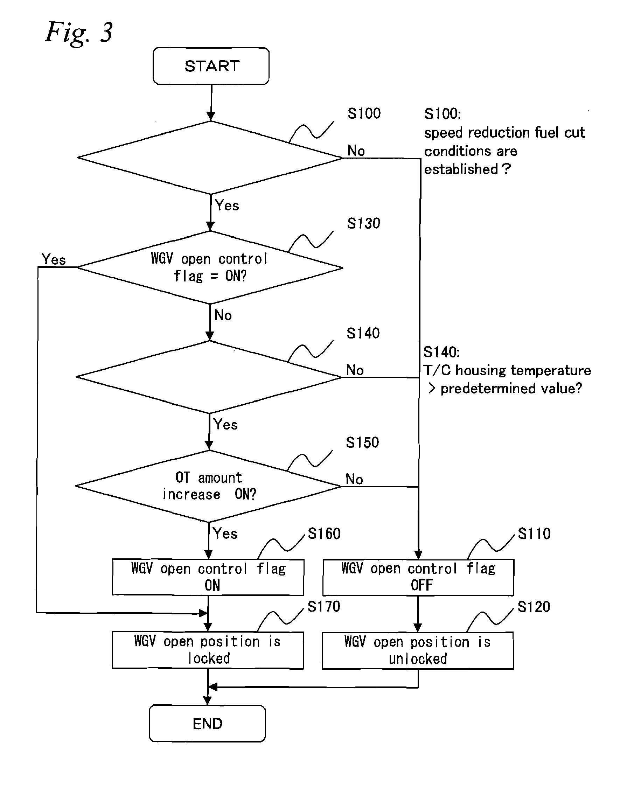

Fig. 3 is a flowchart illustrating a control routine that the ECU 50 executes to implement the above-described operation. The control routine shown in Fig. 3 is executed to control the waste gate valve 22 during the fuel cut. The routine shown in Fig. 3 first performs step S100 in which ECU 50 judges whether speed reduction fuel cut conditions are established. The speed reduction fuel cut conditions are established when the speed of the vehicle is reduced (the ECU 50 concludes that the throttle is OFF) and the engine speed is not lower than a predefined value. For example, the speed reduction fuel cut conditions are established when the vehicle speed is reduced in the OT region (high-load region).

When the judgment result obtained in step S100 does not indicate that the speed reduction fuel cut conditions are established, the ECU 50 proceeds to step S110 and turns OFF a WGV open control flag which determines whether or not to lock the waste gate valve 22 into the open position. The ECU 50 outputs an OFF signal to the actuator 24. The actuator 24 stops a control operation that is performed to lock the waste gate valve 22 into the open position. The waste gate valve 22 is then unlocked in step S120.

When, on the other hand, the judgment result obtained in step S100 indicates that the speed reduction fuel cut conditions are established, the ECU 50 performs the speed reduction fuel cut. The ECU 50 executes a fuel cut control routine separately from the currently executed routine in order to shut off the supply of the drive signal to the injector and stops the injection of fuel. Next, the ECU 50 proceeds to step S130 and judges whether the WGV open control flag is ON.

When the judgment result obtained in step S130 indicates that the WGV open control flag is OFF, the ECU 50 proceeds to step S140 and judges whether a turbine housing temperature is higher than a predetermined value. The turbine housing temperature is the temperature of the turbine housing 16c. The turbine housing temperature can be calculated as an estimated temperature, for instance, from a relational map or relational expression that is predetermined by experiment or the like to represent the relationship between the history of operating status and the turbine housing temperature that is based on a value detected by the exhaust temperature sensor. Further, the predetermined value is stored in the ECU 50. The predetermined value is a value that is determined by experiment or the like to represent the upper-limit temperature of the turbine housing 16c, which does not facilitate the sintering of the catalyst 18.

When the judgment result obtained in step S140 indicates that the turbine housing temperature is not higher than the predetermined value, the ECU 50 performs steps S110 and beyond as described earlier.

When, on the other hand, the judgment result obtained in step S140 indicates that the turbine housing temperature is higher than the predetermined value, the ECU 50 proceeds to step S150 and judges whether the OT amount increase control is being exercised. When the judgment result obtained in step S150 does not indicate that the OT amount increase control is being exercised, the ECU 50 performs steps S110 and beyond as described earlier.

When, on the other hand, the judgment result obtained in step S150 indicates that the OT amount increase control is being exercised, the ECU 50 proceeds to step S160 and turns ON the WGV open control flag. The ECU 50 outputs an ON signal to the actuator 24. In step S170, the actuator 24 exercises control so as to lock the waste gate valve 22 into the open position.

When the judgment result obtained in step S130 indicates that the WGV open control flag is ON, the ECU 50 performs step S170 as described above.

As described above, the routine shown in Fig. 3 locks the waste gate valve 22 into the open position when the speed reduction fuel cut is performed in a situation where the turbine housing temperature of the turbocharger 16 is higher than the predetermined value and the OT amount increase control is exercised. Therefore, part of the gas flowing in the exhaust path 14 can be introduced into the bypass path 20 to bypass the turbine housing 16c having a large heat mass. As part of the gas bypasses the turbine housing 16c, the amount of heat received by the gas can be reduced to suppress a decrease in the temperature of the catalyst 18. Consequently, the system according to the present embodiment makes it possible to inhibit the catalyst 18 from being deteriorated by sintering.

Meanwhile, it is assumed that the system according to the first embodiment, which has been described above, locks the waste gate valve 22 into the open position when the speed reduction fuel cut is performed in a situation where the turbine housing temperature of the turbocharger 16 is higher than the predetermined value and the OT amount increase control is exercised. However, the present invention is not limited to the above control conditions. The system may alternatively lock the waste gate valve 22 into the open position when the speed reduction fuel cut is performed in a situation where the turbine housing temperature of the turbocharger 16 is higher than the predetermined value. This also holds true for a second embodiment of the present invention.

In the first embodiment, which has been described above, the turbocharger 16 corresponds to the "turbocharger" according to the first aspect of the present invention; the turbine 16a corresponds to the "turbine" according to the first aspect; the exhaust path 14 corresponds to the "exhaust path" according to the first aspect; the catalyst 18 corresponds to the "catalyst" according to the first aspect; the bypass path 20 corresponds to the "bypass path" according to the first aspect; the waste gate valve 22 corresponds to the "waste gate valve" according to the first and fourth aspects; the actuator 24 corresponds to the "actuator" according to the fourth aspect; and the turbine housing 16c corresponds to the "turbine housing" according to the fifth aspect.

Further, in the first embodiment, the "speed reduction fuel cut operation execution means" according to the first aspect of the present invention is implemented when the ECU 50 performs step S100; the "turbocharger temperature acquisition means" according to the first aspect is implemented when the ECU 50 performs step 140; the "OT amount increase control judgment means" according to the second aspect is implemented when the ECU 50 performs step S150; and the "waste gate valve opening means" according to the first to fourth aspects is implemented when the ECU 50 performs step S100 and steps S140 to S170.

### Second Embodiment

### [Configuration of system according to second embodiment]

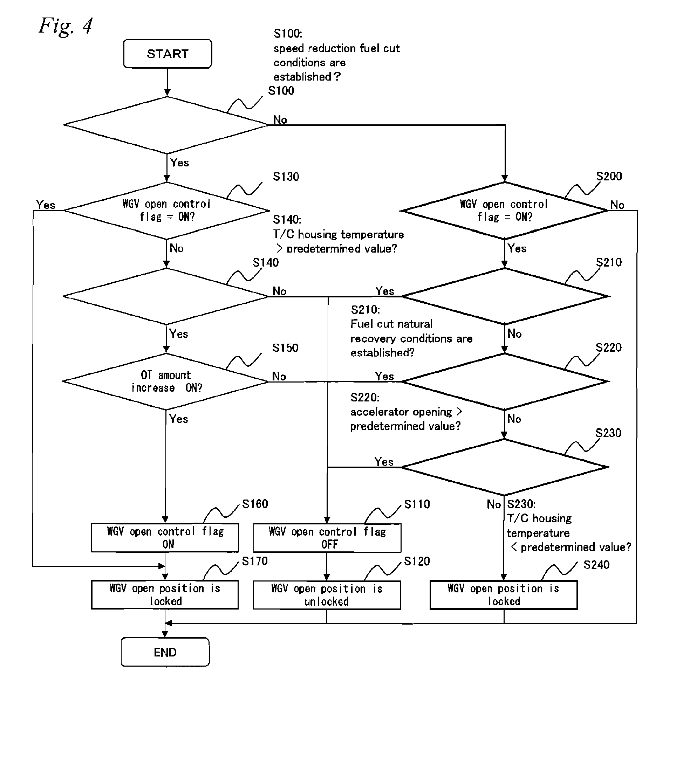

A second embodiment of the present invention will now be described with reference to Fig. 4. The system according to the second embodiment can be implemented when the configuration shown in Fig. 1 is employed to let the ECU 50 execute a later-described routine shown in Fig. 4.

### [Control unique to second embodiment]

In the first embodiment, which has been described earlier, the deterioration of the catalyst 18 is suppressed by locking the waste gate valve 22 into the open position under predetermined conditions when the speed reduction fuel cut is performed. Incidentally, the driver of the vehicle may step on the accelerator to generate an acceleration request when the waste gate valve 22 is locked into the open position by the control routine shown in Fig. 3. In such an instance, high acceleration response is demanded. Meanwhile, the turbine housing temperature may be still high in some cases. It is therefore preferred that the acceleration response be enhanced while the temperature rise in the catalyst 18 is suppressed.

Consequently, when an acceleration request is generated to achieve forced recovery from the speed reduction fuel cut operation and change the operating status to a normal operation in a situation where the waste gate valve 22 is locked into the open position by the control routine shown in Fig. 3, the system according to the second embodiment closes the waste gate valve 22 when a requested torque (e.g., accelerator opening) is greater than a predetermined value and opens the waste gate valve 22 when the requested torque is not greater than the predetermined value.

### (Control routine)

Fig. 4 is a flowchart illustrating a control routine that the ECU 50 executes to implement the above-described functionality. This routine is similar to the routine shown in Fig. 3 except that steps S200 to S240 are additionally performed. In Fig. 4, steps identical with those shown in Fig. 3 are designated by the same step numbers as those indicated in Fig. 3 and will be briefly described or omitted from the subsequent description to avoid redundancy.

Referring to Fig. 4, when the judgment result obtained in step S100 does not indicate that the earlier-described speed reduction fuel cut conditions are established, the fuel cut terminates so that the operating status reverts to a normal operation in which combustion occurs. In this instance, the ECU 50 proceeds to step S200 and judges whether the WGV open control flag is ON. When the WGV open control flag is judged to be OFF, the routine terminates its process.

When the judgment result obtained in step S200 indicates that the WGV open control flag is ON, the ECU 50 proceeds to step S210 and judges whether natural recovery or forced recovery is to be made from the fuel cut. When the engine speed is lower than a recovery revolving speed (e.g., a low revolving speed such as an idle revolving speed), the ECU 50 judges that natural recovery is to be made. When the judgment result indicates that natural recovery is to be made, the ECU 50 performs steps S110 and beyond as described earlier. When, on the other hand, the accelerator opening sensor 54 detects an accelerator ON signal, the ECU 50 judges that forced recovery is to be made.

When the judgment result obtained in step S210 indicates that forced recovery is to be made instead of natural recovery, the ECU 50 proceeds to judge whether an acceleration request is generated. More specifically, the ECU 50 proceeds to step S220 and judges whether the accelerator opening is greater than a predetermined value. The accelerator opening is detected by the accelerator opening sensor 54. The predetermined value is stored in the ECU 50. The predetermined value is obtained in consideration, for instance, of drivability to represent an accelerator opening at which the acceleration response needs to be emphasized, and at least greater than an accelerator opening value for idling.

When the judgment result obtained in step S230 indicates that the accelerator opening is greater than the predetermined value, the ECU 50 performs steps S110 and beyond as described earlier to abort a control operation for locking the waste gate valve 22 into the open position (step S120).

When the judgment result obtained in step S220 indicates that the accelerator opening is not greater than the predetermined value, the ECU 50 proceeds to step S230 and judges whether the turbine housing temperature is lower than a predetermined value. It is assumed that the turbine housing temperature is the temperature of the turbine housing 16c. The turbine housing temperature can be calculated as an estimated temperature, for instance, from a relational map or relational expression that is predetermined by experiment or the like to represent the relationship between the history of operating status and the turbine housing temperature that is based on a value detected by the exhaust temperature sensor. Further, the predetermined value is stored in the ECU 50. The predetermined value is a value that is determined by experiment or the like to represent the upper-limit temperature of the turbine housing 16c that does not facilitate the sintering of the catalyst 18.

When the judgment result obtained in step S230 indicates that the turbine housing temperature is lower than the predetermined value, the ECU 50 performs steps S110 and beyond as described earlier.

When, on the other hand, the judgment result obtained in step S230 indicates that the turbine housing temperature is not lower than the predetermined value, the ECU 50 outputs an ON signal to the actuator 24. The actuator 24 continuously exercises control to lock the waste gate valve 22 into the open position (step S240).

As described above, the routine shown in Fig. 4 closes the waste gate valve 22 to enhance the acceleration response if the accelerator opening is greater than the predetermined value when forced recovery is made from the speed reduction fuel cut in response to an acceleration request in a situation where the waste gate valve 22 is locked into the open position by the control routine shown in Fig. 3. If, on the other hand, the accelerator opening is not greater than the predetermined value, the routine shown in Fig. 4 keeps the waste gate valve 22 open to suppress a temperature rise in the catalyst 18. Consequently, the present invention makes it possible to enhance the acceleration response while suppressing the temperature rise in the catalyst 18.

Meanwhile, it is assumed that the system according to the second embodiment, which has been described above, performs a judgment process in step S220 to check whether the accelerator opening is greater than the predetermined value. However, the present invention is not limited to the above judgment process. For example, the system may alternatively calculate the requested torque which is calculated in accordance with a driver-requested torque and a vehicle-control-requested torque, and judge whether the requested torque is greater than the predetermined value. The driver-requested torque is calculated in accordance with the accelerator opening detected by the accelerator opening sensor 54. The vehicle-control-requested torque is calculated in accordance with a vehicle's request necessary for vehicle control. The predetermined value is at least greater than a requested torque value for idling and predetermined by experiment or the like for a specific vehicle.

In the second embodiment, which has been described above, the "forced recovery judgment means" according to the third aspect of the present invention is implemented when the ECU 50 performs step S210; the "acceleration request judgment means" according to the third aspect is implemented when the ECU 50 performs step S220; the "forced recovery time waste gate valve closing means" according to the third aspect is implemented when the ECU 50 performs steps S200 to S220 and steps S110 to S120; and the "forced recovery time waste gate valve opening means" according to the third aspect is implemented when the ECU 50 performs steps S200 to S240.

### Description of Reference Numerals

10 internal combustion engine
12 intake path
14 exhaust path
16 turbocharger
16a turbine
16b compressor
18 catalyst
19 exhaust temperature sensor
20 bypass path
22 waste gate valve
24 actuator
28 air flow meter
30 inter-cooler
32 throttle valve
33 throttle opening sensor
50 ECU (electronic control unit)
52 crank angle sensor
54 accelerator opening sensor

## Claims

1. A control device for an internal combustion engine, the control device comprising:
a turbine for a turbocharger that is installed in an exhaust path of the internal combustion engine;
a catalyst installed in the exhaust path and disposed downstream of the turbine;
a bypass path for bypassing the turbine by connecting the exhaust path upstream of the turbine to the exhaust path between the turbine and the catalyst;
a waste gate valve capable of opening and closing the bypass path;
turbocharger temperature acquisition means for acquiring a temperature of the turbocharger;
speed reduction fuel cut operation execution means for performing a speed reduction fuel cut operation by shutting off the supply of fuel to the internal combustion engine at the time of vehicle speed reduction; and
waste gate valve opening means for opening the waste gate valve when the speed reduction fuel cut operation is performed in a situation where the temperature is higher than a temperature setting.

2. The control device according to claim 1, further comprising:
OT amount increase control judgment means for judging whether OT amount increase control is being exercised, the OT amount increase control being exercised to correctively increase the amount of fuel supply to the internal combustion engine for the purpose of decreasing a temperature of exhaust gas discharged from the internal combustion engine;
wherein the waste gate valve opening means opens the waste gate valve when the speed reduction fuel cut operation is performed in a situation where the temperature is higher than the temperature setting and the OT amount increase control is being exercised.

3. The control device according to claim 1 or 2, further comprising:
forced recovery judgment means for judging whether forced recovery is to be made for a recovery upon receipt of an acceleration request to switch from the speed reduction fuel cut operation to a normal operation;
acceleration request judgment means for judging whether the acceleration request is greater than a predetermined value;
forced recovery time waste gate valve closing means for closing the waste gate valve when forced recovery is to be made for the recovery in a situation where the acceleration request is greater than the predetermined value; and
forced recovery time waste gate valve opening means for opening the waste gate valve when forced recovery is to be made for the recovery in a situation where the acceleration request is not greater than the predetermined value and the temperature is not lower than the temperature setting.

4. The control device according to any one of claims 1 to 3, further comprising:
an actuator capable of locking the waste gate valve into an open position;
wherein the waste gate valve is a pressure-controlled valve that opens when a pressure of an exhaust supplied to the turbine exceeds a predetermined value and closes when the pressure of the exhaust is at a level prevailing during the speed reduction fuel cut operation; and
wherein the waste gate valve opening means opens the waste gate valve when the actuator locks the waste gate valve into the open position.

5. The control device according to any one of claims 1 to 4, wherein the temperature is an estimated temperature of a turbine housing which is a part of the turbocharger.
